# FASCICULE DE BREVET EUROPEEN

(11) **EP 4 504 529 B1**
(45) Date de publication et mention de la délivrance du brevet: **06.05.2026**
(21) Numéro de dépôt: 23712536.4
(22) Date de dépôt: 21.03.2023
(51) Int. Cl.: B60C 11/12, B60C 11/00, B60C 11/24

(54) **PNEUMATIQUE COMPORTANT UNE BANDE DE ROULEMENT RECREUSABLE**
LUFTREIFEN MIT EINER NACHSCHNEIDBAREN LAUFFLÄCHE
PNEUMATIC TIRE COMPRISING A REGROOVEABLE TREAD

(30) Priorité: 05.04.2022 FR 2203108
(43) Date de publication de la demande: 12.02.2025
(73) Titulaire: COMPAGNIE GENERALE DES ETABLISSEMENTS MICHELIN, 63000 Clermont-Ferrand (FR)
(72) Inventeur: DAYET, Patrick, 63040 CLERMONT-FERRAND CEDEX 09 (FR); BESTGEN, Luc, 63040 CLERMONT-FERRAND CEDEX 09 (FR); THIEL, Baptiste, 63040 CLERMONT-FERRAND CEDEX 09 (FR)
(74) Mandataire: M.F.P. Michelin
(86) Numéro de dépôt international: PCT/EP2023/057206
(87) Numéro de publication internationale: WO 2023/194096

(56) Documents cités:
- EP-A1- 3 269 568
- DE-A1- 102014 225 977
- DE-A1- 102016 224 366

## Description

La présente invention concerne un pneumatique, à armature de carcasse radiale et plus particulièrement un pneumatique destiné à équiper des véhicules portant de lourdes charges, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

La direction circonférentielle du pneumatique, ou direction longitudinale, est la direction tangente à la périphérie du pneumatique et définie par la direction de roulement du pneumatique.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

La direction transversale ou axiale du pneumatique est parallèle à l'axe de rotation du pneumatique. Une distance axiale est mesurée selon la direction axiale. L'expression « axialement intérieur à, respectivement axialement extérieur à » signifie « dont la distance axiale mesurée depuis le plan équatorial est inférieure à, respectivement supérieure à ».

La direction radiale est une direction coupant l'axe de rotation du pneumatique et perpendiculaire à celui-ci. Une distance radiale est mesurée selon la direction radiale. L'expression « radialement intérieur à, respectivement radialement extérieur à » signifie « dont la distance radiale mesurée depuis l'axe de rotation du pneumatique est inférieure à, respectivement supérieure à ».

Radialement à l'extérieur de l'armature de sommet, on trouve la bande de roulement habituellement constituée de matériaux polymériques destinés à venir au contact du sol dans l'aire de contact entre le sol et le pneumatique.

Il est connu de pourvoir la bande de roulement, c'est-à-dire la partie du pneumatique destinée à venir en contact avec le sol lors du roulage et à s'user lors du roulage, d'une sculpture formée d'éléments en relief délimités par des découpures telles que des rainures, qu'elles soient d'orientation circonférentielle, transversale ou oblique. L'objectif d'une telle sculpture est de conférer à la bande de roulement de bonnes performances en roulage sur chaussée sèche et sur chaussée revêtue d'eau notamment par temps de pluie.

Pour améliorer les performances des bandes de roulement sans toutefois trop abaisser les rigidités de cisaillement desdites bandes, il est connu de former sur la surface de roulement une pluralité d'arêtes orientées transversalement ou en oblique afin de couper la pellicule d'eau sur une chaussée pour assurer un bon contact entre la bande de roulement et la chaussée. Un moyen d'obtention de telles arêtes consiste à pourvoir la bande avec une pluralité de découpures, ces découpures ayant la forme de rainures ou la forme d'incisions. On distingue, dans la présente demande, les incisions des rainures en ce que les incisions ont une largeur appropriée pour permettre pendant le roulage un contact au moins partiel entre les parois en vis-à-vis délimitant ces incisions et notamment au cours du passage dans le contact avec le sol, ce qui ne saurait être le cas pour les rainures dans les conditions normales d'usage du pneu.

Au sens de l'invention, une découpure désigne de manière générique soit une rainure soit une incision et correspond à l'espace délimité par des parois de matière se faisant face et distantes l'une de l'autre d'une distance non nulle (dite "largeur de la découpure"). Ce qui différencie une incision d'une rainure c'est précisément cette distance ; dans le cas d'une incision, cette distance est appropriée pour permettre la mise en contact au moins partielle des parois opposées délimitant ladite incision au moins lors du passage dans le contact avec la chaussée. Dans le cas d'une rainure, les parois de cette rainure ne peuvent venir en contact l'une contre l'autre dans les conditions usuelles de roulage.

Au sens de l'invention, une découpure d'orientation longitudinale est une découpure dont le plan moyen d'au moins une partie des parois de ladite découpure forme un angle avec un plan longitudinal inférieur à 10°. Cet angle formé avec un plan longitudinal peut être orienté dans un sens ou dans l'autre par rapport audit plan longitudinal. Une découpure d'orientation longitudinale peut encore être une découpure dont les parois ondulent ou zigzaguent autour d'un plan moyen tel qu'il vient d'être décrit.

Au sens de l'invention, une découpure d'orientation transversale est une découpure dont le plan moyen d'au moins une partie des parois de ladite découpure forme un angle avec un plan radial inférieur à 35°. Cet angle formé avec un plan radial peut être orienté dans un sens ou dans l'autre par rapport audit plan radial. Une découpure d'orientation transversale peut encore être une découpure dont les parois ondulent ou zigzaguent autour d'un plan moyen tel qu'il vient d'être décrit.

Au sens de l'invention, une découpure d'orientation oblique est une découpure dont le plan moyen d'au moins une partie des parois de ladite découpure forme un angle avec un plan radial compris entre 35° et 80°. Cet angle formé avec un plan radial peut être orienté dans un sens ou dans l'autre par rapport audit plan radial. Une découpure d'orientation oblique peut encore être une découpure dont les parois ondulent ou zigzaguent autour d'un plan moyen tel qu'il vient d'être décrit.

Combiné à ce besoin d'améliorer la performance d'adhérence par la présence d'arêtes formées par les découpures transversales, il est également requis que les performances d'une bande de roulement soient pérennes, c'est-à-dire que des performances satisfaisantes soient atteintes même après une usure partielle plus ou moins avancée. Par usure partielle d'une bande de roulement, on entend un état d'usure correspondant à une épaisseur de bande de roulement au plus égale à l'épaisseur totale de bande pouvant être usée avant de devoir changer le pneumatique notamment pour des raisons de réglementation.

Les rainures comportent généralement des témoins d'usure, petites plates-formes de mélange caoutchouteux vulcanisé couvrant sur une certaine longueur circonférentielle le fond de ces rainures, ledit témoin indiquant la profondeur de sculpture minimale qui doit légalement rester sur la bande de roulement en utilisation.

Les sculptures pour véhicules poids lourd peuvent être recreusables (opération par laquelle on peut recreuser de nouvelles rainures), et les pneumatiques ayant de telles sculptures portent sur leurs flancs la mention anglaise "Regroovable" ou le symbole "U". Le recreusage permet d'une part de prolonger le potentiel d'adhérence du pneumatique poids lourd et d'autre part d'accroître de façon importante le rendement kilométrique.

Le recreusage des pneus Poids Lourd est une opération usuelle autorisée pour la sécurité et l'accroissement de rendement qu'elle entraîne. A titre d'exemple, elle est explicitement autorisée par le Code de la Route français (Art. 4 de l'arrêté du 24/10/94) et recommandée par l'E.T.R.T.O. et l'A.F.N.O.R. (norme NFR12714). Pour cette opération, les manufacturiers sont tenus de mettre à disposition des schémas de recreusage qui s'imposent aux techniciens en charge de ce recreusage.

Les hauteurs de rainures sur pneumatique neuf sont mesurables et les hauteurs de rainures après recreusage peuvent se déduire de ces schémas de recreusage.

Comme connu en soi, le recreusage d'une rainure peut s'effectuer à l'aide d'une lame arrondie chauffante, manipulée encore souvent par un opérateur. Ladite lame, reliée à un bâti qui prend appui sur la surface de bande de roulement, peut être utilisée manuellement de façon à suivre assez fidèlement le tracé de la rainure sur la surface de la bande de roulement, même dans le cas d'une rainure à tracé non rectiligne.

Les pneus recreusables sont décrits par example dans les documents DE102014225977A1 et EP3269568.

Le recreusage permet de redonner des arêtes vives et est usuellement prévu pour redonner une hauteur de sculpture correspondant à celle d'un pneu poids lourd à miusure. Les recommandations usuelles visent une hauteur après recreusage de 5 à 6 mm composée d'un recreusage de 3 à 4 mm et de 2 mm de hauteur restante ; dans la pratique, le recreusage est souvent réalisé plus tôt avec des hauteurs restantes comprises entre 4 et 5 mm conduisant à une hauteur après recreusage de 7 à 9 mm, pour des hauteurs de sculptures des pneumatiques à l'état neuf comprises entre 12 et 20 mm.

Le recreusage d'un pneumatique présente plusieurs avantages. Tout d'abord, en redonnant de la hauteur de sculpture au pneumatique, le recreusage permet de prolonger la vie du pneumatique.

En outre, le recreusage étant effectué lorsque l'épaisseur de la bande de roulement est la plus réduite et donc lorsque le pneumatique présente la plus faible résistance au roulement, la distance parcourue est prolongée lorsque la résistance au roulement est la plus faible.

Les inventeurs se sont donnés pour mission d'être en mesure de fournir des pneumatiques présentant des performances en termes de résistance au roulement encore améliorées en conservant une distance de roulage toujours plus importante et de bonnes propriétés d'adhérence sur sol humide.

Ce but a été atteint selon l'invention par un pneumatique, recreusable au moins une fois, comprenant une armature de sommet, elle-même coiffée radialement d'une bande de roulement, constituée d'au moins un mélange élastomérique, réunie à deux bourrelets par l'intermédiaire de deux flancs, ladite bande de roulement comportant au moins une rainure recreusable formant au moins un élément de sculpture constituant la sculpture du pneumatique, présentant une hauteur entre le fond de ladite au moins une rainure et la surface de roulement lorsque le pneumatique est neuf et au moins une incision affleurant la surface de roulement lorsque le pneumatique est neuf, présentant une hauteur entre le fond de ladite au moins une incision et la surface de roulement lorsque le pneumatique est neuf, la hauteur de ladite au moins une incision du pneumatique à l'état neuf étant supérieure à la hauteur de rainure de ladite au moins une rainure recreusable du pneumatique à l'état neuf. Après recreusage, la hauteur de ladite au moins une rainure recreusée est supérieure ou égale à 70 % de la hauteur de rainure de ladite au moins une rainure recreusable du pneumatique à l'état neuf.

Ladite au moins une incision présente avantageusement une orientation transversale ou oblique.

Au sens de l'invention, la hauteur de rainure et la hauteur d'incision sont mesurées dans une coupe méridienne du pneumatique et correspondent à la distance mesurée entre la surface radialement extérieure de la bande de roulement, formant la surface de contact avec le sol et extrapolée pour faire abstraction des découpures, et la surface des fonds de sculpture, ladite distance étant mesurée selon une direction normale à la surface radialement extérieure de la bande de roulement. Les fonds de sculpture sont les points radialement les plus intérieurs des zones en creux sur la bande de roulement, en faisant abstraction de la présence des éléments tels que témoins d'usure, puits indicateurs de profondeur de recreusage ou tout autre élément dont la somme des surfaces fait moins de 15 % de la surface totale de la découpure.

La hauteur d'incision de ladite au moins une incision du pneumatique à l'état neuf est ainsi mesurée sur pneumatique neuf.

La hauteur de rainure de ladite au moins une rainure recreusable du pneumatique à l'état neuf est également mesurée sur pneumatique neuf. La hauteur de ladite au moins une rainure recreusée peut de la même façon être mesurée lorsque le pneumatique est recreusé ; la hauteur de ladite au moins une rainure recreusée peut également être déterminée comme expliqué précédemment à partir du pneumatique neuf et du schéma de recreusage fourni par le manufacturier.

Avantageusement selon l'invention, la hauteur correspondant à la distance entre la surface de roulement à l'état neuf et le fond des rainures après le dernier recreusage est supérieure ou égale à 200% de la hauteur entre le fond de la rainure et la surface de roulement lorsque le pneumatique est neuf. Avantageusement encore, la hauteur correspondant à la distance entre la surface de roulement à l'état neuf et le fond des rainures après le dernier recreusage est supérieure ou égale à 250% de la hauteur entre le fond de la rainure et la surface de roulement lorsque le pneumatique est neuf.

La hauteur correspondant à la distance entre la surface de roulement à l'état neuf et le fond des rainures après le dernier recreusage peut être déterminée lorsque le pneumatique est recreusé ou bien peut également être déterminée comme expliqué précédemment à partir du pneumatique neuf et du schéma de recreusage fourni par le manufacturier.

Selon un mode de réalisation préféré de l'invention, la hauteur de ladite au moins une incision du pneumatique à l'état neuf est supérieure à 90% de la hauteur correspondant à la distance entre la surface de roulement à l'état neuf et le fond de ladite au moins une rainure après le dernier recreusage.

De préférence encore, la hauteur de ladite au moins une incision du pneumatique à l'état neuf est égale à la hauteur correspondant à la distance entre la surface de roulement à l'état neuf et le fond des rainures après le dernier recreusage.

Les essais réalisés avec des pneumatiques conformes à l'invention ont mis en évidence qu'en comparaison avec des pneumatiques recreusables usuels, les performances en termes de résistance au roulement sont améliorées en conservant des propriétés d'adhérence sur sol mouillé semblables et pour des kilométrages jusqu'à usure complète du pneumatique sensiblement identiques.

Les inventeurs ont tout d'abord su mettre en évidence que la combinaison d'une épaisseur de bande de roulement sensiblement identique à celle d'un pneumatique de conception plus usuelle avec des hauteurs de rainures à l'état neuf réduites en comparaison de celles de pneumatiques de conception plus usuelle permet d'augmenter significativement les performances en termes de résistance au roulement.

En effet, pour des épaisseurs de bande de roulement semblables à celles de pneumatiques de conception plus usuelle, la hauteur des rainures après recreusage supérieures à 70% de la hauteur des rainures à l'état neuf signifie que la hauteur des rainures à l'état neuf est réduite en comparaison de celle des pneumatiques de conception plus usuelle.

Comme énoncé précédemment, le recreusage prévu sur des pneumatiques de conception plus usuelle conduit à des hauteurs des rainures inférieures à la moitié de la hauteur des rainures à l'état neuf. Conformément à l'invention, pour une épaisseur de bande de roulement donnée, le recreusage de la bande de roulement doit donc être effectué vraisemblablement plus rapidement c'est-à-dire pour une usure moindre de la bande de roulement que dans le cas d'un pneumatique de conception plus usuelle.

Les inventeurs ont ainsi su mettre en évidence, que ce recreusage précipité de la bande de roulement du pneumatique selon l'invention permet d'améliorer nettement ses performances en termes de résistance au roulement tout au long de son usage et notamment pendant la phase de roulage avant recreusage.

La présence des incisions sur une profondeur supérieure à celle des rainures initiales et avantageusement égale à la hauteur correspondant à la distance entre la surface de roulement à l'état neuf et le fond de ladite au moins une rainure après le dernier recreusage, permet de conserver la présence de ces incisions après le premier recreusage et avantageusement jusqu'à usure complète de la bande de roulement après le dernier recreusage. Les performances d'adhérence sont ainsi optimisées tout au long de l'usage du pneumatique.

Les conceptions usuelles de pneumatiques selon lesquelles les rainures présentent une profondeur plus importante que selon l'invention à l'état neuf comportent des incisions dont la profondeur n'excède habituellement pas la profondeur desdites rainures. La présence de telles rainures diminue la rigidité globale de la bande de roulement et favorise l'ouverture des incisions ; des profondeurs d'incisions plus importantes que celles des rainures conduiraient à des ouvertures encore plus importantes de ces incisions et augmenterait le risque de pénétration de petits cailloux pouvant venir endommager les fonds des incisions et interdisant tout recreusage. De plus la réalisation d'incisions de profondeur supérieure à la profondeur des rainures contribue à augmenter la souplesse de la bande de roulement et donc accentue encore ce risque de pénétration de cailloux.

Les inventeurs ont encore su mettre en évidence que l'association selon l'invention, d'incisions dont la profondeur est plus importante que celle des rainures, lesdites rainures présentant une profondeur à l'état neuf réduite en comparaison de celles de pneumatiques de conception plus usuelle, permet d'empêcher l'éventuelle pénétration de petits cailloux dans lesdites rainures lors de roulage. En effet, l'augmentation de rigidité de la bande de roulement du fait de rainures de faibles profondeurs en comparaison de conceptions plus usuelles autorise la réalisation d'incisions dont la profondeur va au-delà de celle des rainures sans que celles-ci ne s'ouvrent trop lors de roulage de sorte que de petits cailloux puissent venir s'insérer entre les parois desdites incisions. En outre, cette augmentation de rigidité de la bande de roulement par rapport aux conceptions plus usuelles compense l'assouplissement qui peut être conféré par des incisions de plus grande profondeur, y compris lorsque celles-ci sont prévues avec une profondeur égale à la hauteur correspondant à la distance entre la surface de roulement à l'état neuf et le fond de ladite au moins une rainure après le dernier recreusage.

L'augmentation de la rigidité de la bande de roulement par rapport aux conceptions plus usuelle du fait de rainures de faibles profondeurs en comparaison de ces conceptions plus usuelles autorise encore d'augmenter le nombre d'incisions sur la bande de roulement par rapport auxdites conceptions plus usuelles. Les inventeurs ont su mettre en évidence que l'augmentation de la rigidité de la bande de roulement obtenue selon l'invention avec des rainures de profondeur plus faibles à l'état neuf, en comparaison de pneumatiques de conception plus usuelle, permet de compenser à la fois l'assouplissement du fait d'incisions plus profondes et l'assouplissement d'un plus grand nombre d'incisions.

Selon un premier mode de réalisation de l'invention, ladite au moins une rainure recreusable est circonférentielle.

Selon un deuxième mode de réalisation de l'invention, ladite au moins une rainure recreusable est transversale.

Selon un troisième mode de réalisation de l'invention, ladite au moins une rainure recreusable est oblique.

Selon d'autres modes de réalisation de l'invention, le pneumatique présente une combinaison de rainures recreusables circonférentielles et/ou transversales et/ou obliques.

Qu'elles soient selon une même orientation ou selon plusieurs orientations, l'invention prévoit avantageusement que l'ensemble des rainures du pneumatique sont recreusées selon l'invention au cours d'une même étape.

Une variante préférée de l'invention combine des rainures circonférentielles et des incisions transversales et/ou obliques. Lorsque l'ensemble des rainures est recreusable conformément à l'invention, et que l'ensemble des incisions présente une hauteur égale à la hauteur correspondant à la distance entre la surface de roulement à l'état neuf et le fond des rainures après le dernier recreusage, la sculpture du pneumatique peut être sensiblement identique à la surface de la bande de roulement tout au long de l'usage du pneumatique y compris après recreusage.

Selon un mode de réalisation avantageux de l'invention, les extrémités de ladite au moins une incision débouchant chacune dans un puit lui-même débouchant en surface de la bande de roulement, lesdits puits présentent une hauteur au moins égale à la hauteur de ladite au moins une incision.

La section du puit en surface de la bande roulement est avantageusement circulaire mais elle peut présenter n'importe quelle forme. La section est encore avantageusement variable dans la profondeur pour indiquer une étape de recreusage. Par exemple un tel puit peut être constitué de plusieurs cylindres dont le diamètre de section diminue en profondeur, deux cylindres étant reliés par une surface sensiblement parallèle à la surface de la bande de roulement. Cette surface peut donner une indication de la limite de recreusage.

Outre, ce type de fonction associée, un tel puit correspond à la partie creusée dans la bande de roulement d'une forme pleine du moule qui est associée à la lamelle du moule qui permet de créer l'incision. Ces deux formes pleines de dimension sensiblement supérieure à l'épaisseur de la lamelle permettent d'apporter de la rigidité à celle-ci et éviter des risques de casse lors du moulage de la bande de roulement du pneumatique.

Selon une variante de réalisation de l'invention ladite au moins une incision relie deux rainures.

Selon cette variante de réalisation, et dans le cas de la présence de puits à chacune des extrémités, ceux-ci sont apparents dans une rainure. Dans le cas d'une section circulaire de ces puits, il peut alors ne subsister en surface de la bande de roulement qu'un demi-cercle formant une excroissance de la rainure.

Selon une telle configuration, les inventeurs prévoient encore avantageusement de disposer les témoins d'usure dans ces excroissances que forment les puits pour libérer au mieux le passage des fluides dans les rainures, les dits témoins d'usure devant être disposés dans ces rainures.

Selon une variante avantageuse de l'invention, après recreusage, la hauteur de ladite au moins une rainure recreusée est supérieure ou égale à 85 % de la hauteur de ladite au moins une rainure recreusable du pneumatique à l'état neuf et de préférence encore supérieure à 95 % de la hauteur de sculpture du pneumatique à l'état neuf.

Selon un mode de réalisation de l'invention au moins une rainure est recreusable au moins deux fois. Selon ce mode de réalisation, il peut être encore possible d'accroître les performances de résistance au roulement en prévoyant des profondeurs de rainures à l'état neuf encore réduites tout en satisfaisant aux performances d'adhérence sur sol mouillé.

Selon ce mode réalisation et dans le cas de plusieurs rainures prévues selon la même orientation ou bien selon plusieurs orientations, l'invention prévoit avantageusement que l'ensemble des rainures du pneumatique sont recreusées simultanément lors de chaque recreusage.

Avantageusement encore selon ce mode de réalisation de l'invention, le mélange élastomérique recreusé lors du premier recreusage est différent du mélange élastomérique recreusé lors du deuxième recreusage. Par exemple, le mélange élastomérique radialement le plus intérieur ne contient pas de charge de type noir pour afficher un contraste de couleur lors de son apparition au moment du premier recreusage. Un tel agencement peut notamment faciliter les étapes de recreusage.

Selon d'autres modes de réalisation de l'invention, notamment si les incisions ne débouchent pas dans des puits, la bande de roulement comporte des indicateurs de profondeur se présentant par exemple sous forme de puits ou d'incisions de largeur faible non nulle placées en fond de rainure soit parallèlement à la direction de ladite rainure, soit perpendiculairement à ladite direction, soit les deux simultanément, le moyen indiquant les profondeurs minimale et maximale étant alors la forme géométrique du fond de l'incision indicatrice de profondeur.

Avantageusement selon l'invention, le mélange élastomérique recreusable est différent d'au moins une partie du mélange élastomérique constitutif de la bande de roulement. Une telle réalisation peut être obtenue par co-extrusion des mélanges lors de la préparation du ou des semi-finis destinés à constituer au moins en partie la bande de roulement.

L'un ou l'autre des modes de réalisation de l'invention présenté précédemment peut encore être associé à la réalisation d'une bande de roulement complexe par exemple constituée d'au moins deux couches de mélanges élastomériques radialement superposées.

Selon un mode de réalisation de l'invention, l'armature de sommet du pneumatique est formée d'au moins deux couches de sommet de travail d'éléments de renforcement inextensibles, croisés d'une couche à l'autre en faisant avec la direction circonférentielle des angles compris entre 10° et 45°.

Selon d'autres modes de réalisation de l'invention, l'armature de sommet comporte encore au moins une couche d'éléments de renforcement circonférentiels.

Une réalisation de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

D'autres détails et caractéristiques avantageux de l'invention ressortiront ci-après de la description d'exemples de réalisation de l'invention en référence aux figures 1 à 7 qui représentent :
- figure 1, une vue du dessus d'un schéma d'une partie d'une bande de roulement d'un pneumatique selon l'invention,
- figure 2, une vue en perspective d'un schéma d'une partie d'une bande de roulement d'un pneumatique selon l'invention,
- figure 3, une vue en perspective selon une coupe suivant le tracé des incisions d'un schéma d'une partie d'une bande de roulement d'un pneumatique selon l'invention,
- figure 4, une vue en perspective en transparence d'un schéma d'une partie d'une bande de roulement d'un pneumatique selon l'invention,
- figure 5, une vue méridienne d'un schéma d'un pneumatique selon un premier exemple de réalisation de l'invention,
- figure 6, une vue méridienne d'un schéma d'un pneumatique selon un deuxième exemple de réalisation de l'invention,
- figure 7, une représentation schématique de la résistance au roulement durant l'usure d'un pneumatique de référence et de deux pneumatiques selon l'invention.

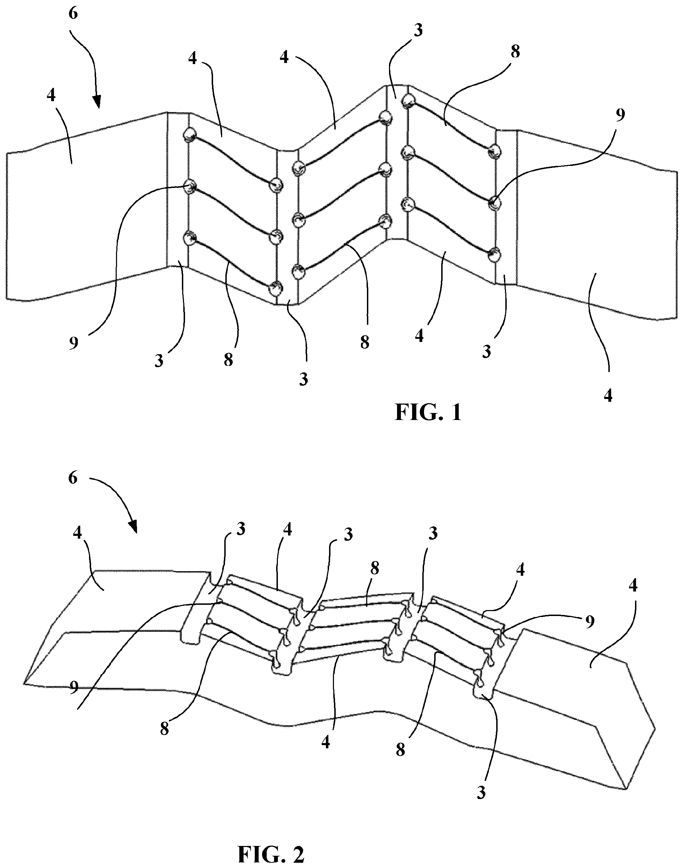

Les figures 1 à 6 ne sont pas représentées à l'échelle pour en simplifier la compréhension.

Ces figures 1 à 6 représentent un pneumatique 1, de dimension 315/70R22.5.

La figure 1 illustre une vue partielle du dessus d'une partie de la bande de roulement 6 d'un pneumatique 1. La bande de roulement 6 comporte des rainures circonférentielles 3 séparant des ribs ou nervures 4. Les rainures 3 sont reliées entre elles par des incisions 8.

Sur la figure 1, les incisions sont orientées selon une direction générale transversale ou oblique. Elles présentent en fait une ondulation autour de cette direction générale de façon à conférer plus de rigidité aux lamelles du moule qui vont permettre de réaliser ces incisions.

Comme expliqué précédemment, les incisons 8 débouchent à chacune de leurs extrémités dans des puits 9 qui correspondent à des éléments pleins positionnées aux extrémités des lamelles dans le moule pour rigidifier celles-ci.

La figure 2 illustre une vue partielle en perspective de cette même partie de la bande de roulement 6 d'un pneumatique 1.

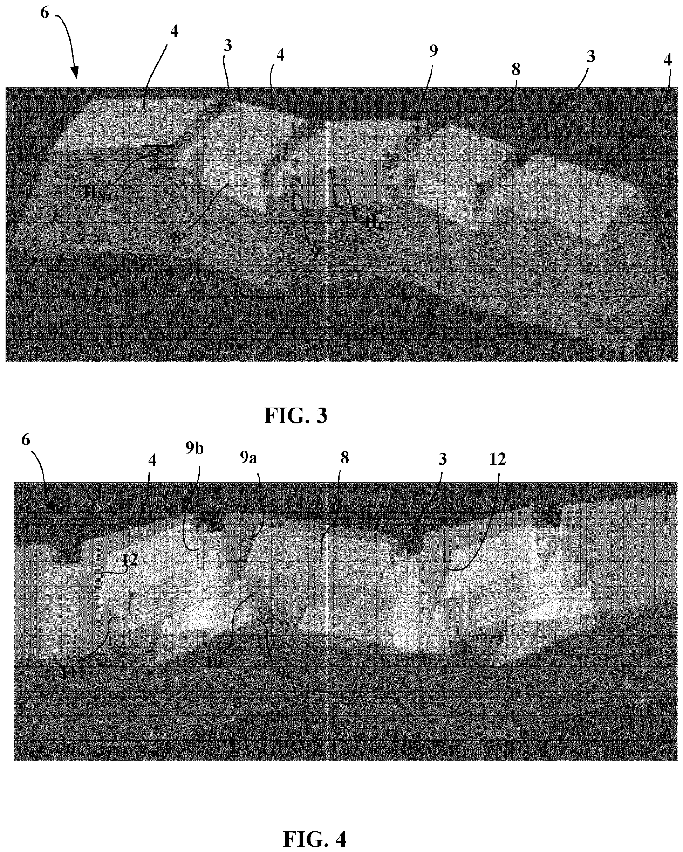

La figure 3 illustre une vue partielle en perspective, selon une coupe suivant le tracé des incisions, d'un schéma de la partie de la bande de roulement 6 d'un pneumatique 1. Nous retrouvons les rainures circonférentielles 3 séparant les ribs ou nervures 4. Les rainures 3 présentent une hauteur H_{N3}. Les rainures 3 sont reliées entres elles par des incisions 8 dont la profondeur Hᵢ est supérieure à la hauteur H_{N3} des rainures 3. Cette hauteur Hᵢ des incisions 8 est égale à la hauteur correspondant à la distance entre la surface de roulement à l'état neuf et le fond d'une rainure 3 après le dernier recreusage.

La figure 4 illustre une vue partielle en transparence d'un schéma de la partie de la bande de roulement 6 d'un pneumatique 1.

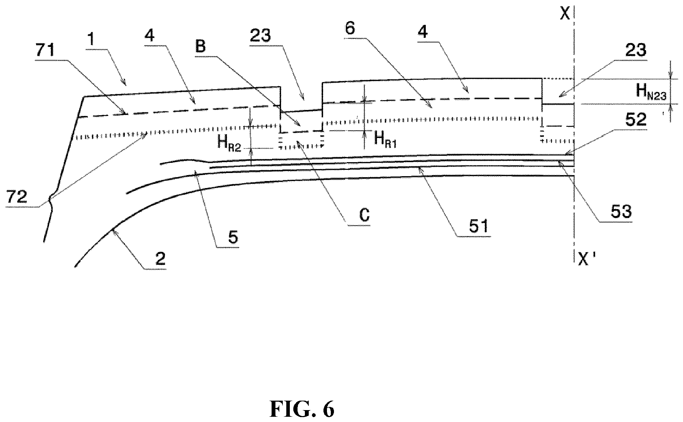

La figure 4 permet de visualiser plus clairement que les puits 9 sont réalisés par un empilage de trois cylindres 9a, 9b, 9c dont les diamètres diminuent en s'enfonçant dans le pneumatique. Ces cylindres 9a, 9b, 9c sont reliés entre eux par des surfaces planes 10, 11. La surface plane 10 marque une limite pour le premier recreusage prévu, comme expliqué précédemment et la surface 11 marquant une limite pour le deuxième recreusage. Les trois cylindres 9a, 9b, 9c correspondent au cas de la figure 6 prévoyant deux recreusages.

Les incisons 8 reliant les rainures 3, les cylindres sont partiellement formés dans les rainures 3 et le cylindre 9a radialement le plus extérieure est ainsi prévu avec uniquement une demi-section formée dans la bande roulement, l'autre moitié étant dans la rainure et donc absente. Ce premier cylindre 9a radialement le plus extérieur est avantageusement prévu pour créer une surface plane 10 de raccordement avec le cylindre suivant pour y disposer un indicateur d'usure 12, libérant ainsi totalement le volume des rainures 3, comme évoqué précédemment.

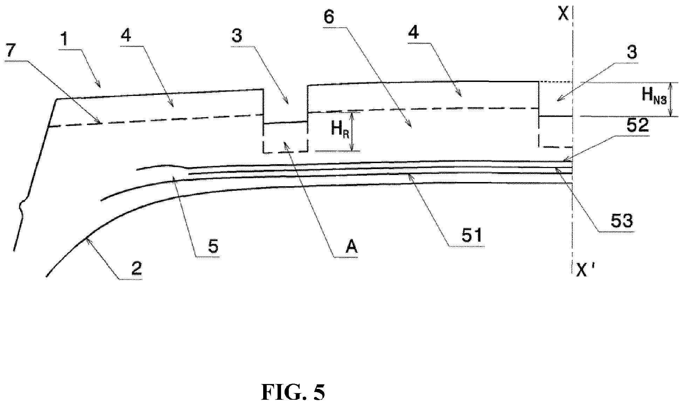

Les figures 5 et 6 ne représentent qu'une demi-vue d'un pneumatique 1 qui se prolonge de manière symétrique par rapport à l'axe XX' qui représente le plan médian circonférentiel, ou plan équatorial du pneumatique 1.

Sur les figures 5 et 6, le pneumatique 1 comprend une armature de carcasse radiale 2 ancrée dans deux bourrelets, autour de tringles, non représentés. L'armature de carcasse 2 est formée d'une seule couche de câbles métalliques. L'armature de carcasse 2 est frettée par une armature de sommet 5, elle-même coiffée d'une bande de roulement 6. La bande de roulement comporte trois rainures 3 formant quatre ribs ou nervures 4. Les incisions transversales ou obliques n'apparaissent pas sur les figures 5 et 6 pour en simplifier la compréhension.

Les zones basses et bourrelets du pneumatique 1 ne sont notamment pas représentés sur les figures.

Sur les figures 5 et 6, l'armature de sommet 5 est formée radialement de l'intérieur à l'extérieur :
- d'une première couche de travail 51 formée de câbles métalliques inextensibles, continus sur toute la largeur de la nappe, orientés d'un angle de 16°, avec la direction circonférentielle,
- d'une couche d'éléments de renforcement circonférentiels 53 formée de câbles métalliques en acier élastiques 21.23, au pas de 2 mm, et
- d'une seconde couche de travail 52 formée de câbles métalliques inextensibles, continus sur toute la largeur de la nappe, orientés d'un angle de 30°, avec la direction circonférentielle, et croisés avec les câbles métalliques de la première couche de travail.

La largeur axiale L₅₁ de la première couche de travail 51 est égale à 246 mm.

La largeur axiale L₅₂ de la deuxième couche de travail 52 est égale à 228 mm.

Quant à la largeur axiale L₅₃ de la couche d'éléments de renforcement circonférentiels 53, elle est égale à 200 mm.

Sur la figure 5, conformément à l'invention, les rainures 3 sont de type recreusables. Comme illustré sur la figure 5, les rainures 3 sont constituées d'une seule couche A formant le fond des rainures à l'état neuf et correspondant à un unique recreusage.

La hauteur sur pneumatique neuf H_{N3} des rainures 3 est égale à 7.5 mm.

La hauteur H_{R} des rainures 3 après le recreusage est égale à 9.5 mm et représente donc 127 % de H_{N3}.

Cette hauteur H_{R} correspond à un recreusage de 7.5 mm lorsqu'il reste une hauteur de la rainure initiale de 2 mm, valeur proche de la limite légale généralement autorisée correspondant à la hauteur minimale et correspondant aux témoins d'usure. Cette limite est symbolisée par la ligne 7 sur la figure 5.

La hauteur non mesurable avant ce recreusage et correspondant à la distance entre la surface de roulement à l'état neuf et le fond d'une rainure 3 après le recreusage est ainsi égale à 15 mm. Le ratio de cette hauteur non mesurable égale à 15 mm sur la hauteur H_{N3} est égale à 2 et donc bien supérieur ou égal à 200 %.

La hauteur H_{R}, mesurée après recreusage, et la hauteur non mesurable avant recreusage et correspondant à la distance entre la surface de roulement à l'état neuf et le fond d'une rainure 3 après le recreusage peuvent également être déterminées sur pneumatique neuf à partir des schémas de recreusage fournis par le manufacturier comme expliqué précédemment.

La figure 6 illustre un pneumatique dont les rainures 23 sont recreusables deux fois. Les rainures 23 sont constituées à l'état neuf de deux couches B et C formant le fond des rainures à l'état neuf et correspondant à ces deux recreusages.

La hauteur sur pneumatique neuf H_{N23} des rainures 23 est égale à 6 mm.

La hauteur H_{R1} des rainures 23 après le premier recreusage est égale à 7 mm et représente donc 117 % de H_{N23}.

Cette hauteur H_{R1} correspond à un recreusage de 5 mm lorsqu'il reste une hauteur de la rainure initiale de 2 mm, valeur proche de la limite légale généralement autorisée correspondant à la hauteur minimale et correspondant aux témoins d'usure. Cette limite est symbolisée par la ligne 71 sur la figure 3.

La hauteur non mesurable avant un premier recreusage et correspondant à la distance entre la surface de roulement à l'état neuf et le fond de la rainure après le premier recreusage est ainsi égale à 11 mm.

La hauteur H_{R1}, mesurée après le premier recreusage, et la hauteur non mesurable avant un premier recreusage et correspondant à la distance entre la surface de roulement à l'état neuf et le fond de la rainure après le premier recreusage peuvent également être déterminées sur pneumatique neuf à partir du schéma de recreusage fourni par le manufacturier, comme expliqué précédemment.

La hauteur H_{R2} des rainures 23 après le deuxième recreusage est égale à 6 mm et représente donc 100 % de H_{N23}. Et la hauteur H_{R2} des rainures 23 après le deuxième recreusage représente 86 % de H_{R1}.

Cette hauteur H_{R2} correspond à un recreusage de 4 mm lorsqu'il reste une hauteur de la rainure de 2 mm, valeur proche de la limite légale généralement autorisée correspondant à la hauteur minimale. Cette limite est symbolisée par la ligne 72 sur la figure 2.

La hauteur non mesurable avant les deux recreusages et correspondant à la distance entre la surface de roulement à l'état neuf et le fond des rainures 23 après le deuxième recreusage est ainsi égale à 15 mm. Le ratio de cette hauteur non mesurable égale à 15 mm sur la hauteur H_{N23} est égale à 2,5 et donc bien supérieur ou égal à 200 %.

La hauteur H_{R2}, mesurée après le deuxième recreusage, et la hauteur non mesurable avant les deux recreusages et correspondant à la distance entre la surface de roulement à l'état neuf et le fond des rainures après le deuxième recreusage peuvent également être déterminées sur pneumatique neuf à partir du schéma de recreusage fourni par le manufacturier, comme expliqué précédemment.

Le pneumatique ainsi présenté sur la figure 6 prévoit deux recreusages à différents stades de l'usure du pneumatique. Avantageusement selon l'invention les rainures sont recreusées simultanément à chaque étape de recreusage.

Selon d'autres variantes de réalisation de l'invention, le recreusage des différentes rainures d'un pneumatique peut être prévu pour se faire de manière décalée dans le temps. Selon ces variantes de réalisation, le pneumatique peut comporter une partie de ces rainures recreusables une unique fois et d'autres rainures recreusables plusieurs fois. Un pneumatique pourrait ainsi comporter une combinaison de rainures telles que celles illustrées sur la figure 5 et de rainures telles que celles illustrées sur la figure 6.

Des pneumatiques ont été réalisés sur la base du mélange élastomérique décrit ci-dessous comme mélange constituant la bande de roulement.

| | Mélange |
|---|---|
| NR | 80 |
| BR | 20 |
| N234 | 48 |
| 6PPD - 1.3DIMETHYL BUTYL PHENYL PARAPHENYLENE-DIAMINE | 3 |
| ZNO | 3 |
| SOUFRE | 1.5 |
| Accélérateur (CBS) | 0.9 |

Les valeurs des constituants sont exprimées en pce (parties en poids pour cent parties d'élastomères).

Un pneumatique de référence R semblable à celui des figures est réalisé selon une configuration correspondant à des réalisations usuelles de recreusage. Il comporte une unique couche de recreusage au fond des rainures telle que la hauteur des rainures après recreusage est égale à 5 mm et représente 42 % de la hauteur des rainures à l'état neuf, elle-même égale à 12 mm. Cette hauteur après recreusage égale à 5 mm correspond à un recreusage de 3 mm lorsqu'il reste une hauteur de la rainure de 2 mm, valeur proche de la limite légale généralement autorisée correspondant à la hauteur minimale. La hauteur non mesurable avant le recreusage et correspondant à la distance entre la surface de roulement à l'état neuf et le fond des rainures après le recreusage est ainsi égale à 15 mm.

Comme dans le cas des pneumatiques selon l'invention et comme expliqué précédemment, la hauteur, mesurée après un premier recreusage, et la hauteur non mesurable avant le recreusage et correspondant à la distance entre la surface de roulement à l'état neuf et le fond des rainures après le recreusage peuvent également être déterminées sur pneumatique neuf à partir des schémas de recreusage fournis par le manufacturier.

Le pneumatique de référence R comporte par ailleurs des incisions semblables à celles des pneumatiques selon l'invention dont la hauteur est identique à la hauteur des rainures à l'état neuf soit 12 mm.

Des pneumatiques T1 et T2 sont réalisés conformément à l'invention.

Le pneumatique T1 est conforme à la représentation de la figure 5.

Le pneumatique T2 est conforme à la représentation de la figure 6.

Des mesures d'adhérence sur sol humide ont été effectuées sur chacun des pneumatiques dans des conditions de roulage identiques conformément à la norme ISO 15222. Les résultats des mesures sont présentés dans le tableau suivant, une valeur de 100 étant attribuée au pneumatique R à l'état neuf. Des valeurs supérieures à 100 expriment une performance en adhérence supérieure.

| | Neuf | Après un recreusage | Après deux recreusages |
|---|---|---|---|
| Pneumatique R | 100 | 96 | |
| Pneumatique T1 | 100 | 100 | |
| Pneumatique T2 | 98 | 100 | 100 |

Ces valeurs montrent qu'à tous les stades de l'usure du pneumatique les propriétés d'adhérence sur sol mouillé sont conservées. Les inventeurs pensent expliquer la valeur de 96 du pneumatique de référence après recreusage d'une part du fait d'une profondeur de sculpture globalement moins importante et d'autre part par une profondeur des incisions moins importante que celles des rainures.

Par ailleurs, des essais d'usure ont été réalisés pour montrer des performances sensiblement identiques avec les pneumatiques T1 et T2 selon l'invention et le pneumatique de référence R. En effet, le volume des matériaux élastomériques constituant la bande de roulement, à user au cours de la vie du pneumatique et du ou des recreusages est sensiblement identiques pour les trois pneumatiques, ce qui conduit à des durées de vie proches. Elles peuvent être légèrement plus élevées pour les pneumatiques T1 et T2 lors d'un usage sévère et légèrement inférieures lors d'un usage que l'on peut qualifier de doux, la différence de classement étant liée à la différence de rigidité de la bande de roulement, la profondeur des rainures étant d'ordre un sur la rigidité de la bande de roulement.

Des mesures de résistance au roulement ont également été effectuées sur chacun des pneumatiques dans des conditions de roulage identiques selon le Règlement n° 117 de la Commission économique pour l'Europe des Nations unies (CEE-ONU). Les résultats des mesures sont présentés dans le tableau suivant, une valeur de 100 étant attribuée au pneumatique R à l'état neuf. Une valeur de 90 signifie que le coefficient de résistance au roulement est réduit de 10% et correspond à une performance en termes de résistance au roulement supérieure. Des mesures sont effectuées sur pneumatique neuf et sur pneumatique raboté pour l'amener au niveau de la limite d'usure usuelle d'environ 2 mm sur chacun des pneumatiques R, T1 et T2. Une mesure est à nouveau effectuée après recreusage sur chacun des pneumatiques R, T1 et T2 et une autre sur chacun des pneumatiques R, T1 et T2 à nouveau rabotés pour être amenés au niveau de la limite d'usure usuelle d'environ 2 mm. Le pneumatique T2 est encore mesuré après le deuxième recreusage et une dernière mesure est effectuée sur ce pneumatique T2 après un rabotage pour l'amener au niveau de la limite d'usure usuelle d'environ 2 mm.

| | Neuf | Limite d'usure | Après un recreusage | Limite d'usure | Après deux recreusages | Limite d'usure |
|---|---|---|---|---|---|---|
| Pneumatique R | 100 | 68 | 72 | 62 | | |
| Pneumatique T1 | 94 | 77 | 86 | 62 | | |
| Pneumatique T2 | 92 | 80 | 86 | 70 | 75 | 62 |

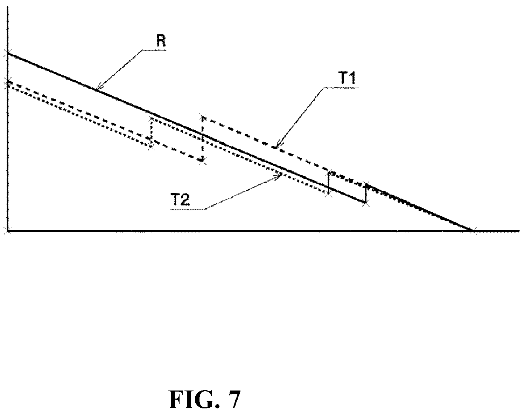

La figure 7 illustre schématiquement une représentation de l'évolution de la résistance au roulement de chacun des pneumatiques R, T1 et T2 depuis leur état neuf jusque leur fin de vie, c'est-à-dire durant les 13 mm d'usure de la bande de roulement. La figure 3 représente, en ordonnée, la valeur mesurée ou estimée de la résistance au roulement du pneumatique en fonction de la hauteur de sculpture usée, en abscisse, cette hauteur partant de 0 pour finir à 13 mm. Les 13 mm correspondent au 15 mm de la bande de roulement prévu pour chacun des pneumatiques R, T1 et T2, tenant compte des 2 mm conservés en fin de vie des pneumatiques, valeur proche de la limite légale généralement autorisée.

Les trois tracés apparaissant sur cette figure 7 correspondent à chacun des pneumatiques R, T1 et T2. Le calcul des surfaces définies par ces trois tracés permet d'estimer la résistance au roulement moyenne durant l'utilisation de chacun de ces pneumatiques. Les résultats ont montré que le pneumatique T1 permet un gain de 7 % par rapport au pneumatique R et que le pneumatique T2 permet un gain de 14 % par rapport au pneumatique R.

## Revendications

1. **-** Pneumatique (1), recreusable au moins une fois, comprenant une armature de sommet (5), elle-même coiffée radialement d'une bande de roulement (6), constituée d'au moins un mélange élastomérique, réunie à deux bourrelets par l'intermédiaire de deux flancs, ladite bande de roulement (6) comportant au moins une rainure recreusable (3) formant au moins un élément de sculpture constituant la sculpture du pneumatique, présentant une hauteur (H_{N3}) entre le fond de ladite au moins une rainure recreusable (3) et la surface de roulement lorsque le pneumatique est neuf, et au moins une incision (8), affleurant la surface de roulement lorsque le pneumatique est neuf, présentant une hauteur (Hᵢ) entre le fond de ladite au moins une incision (8) et la surface de roulement lorsque le pneumatique est neuf, **caractérisé en ce que** la hauteur (Hᵢ) de ladite au moins une incision (8) du pneumatique à l'état neuf est supérieure à la hauteur (H_{N3}) de ladite au moins une rainure recreusable (3) du pneumatique à l'état neuf et **en ce que,** après recreusage, la hauteur (H_{R}) de ladite au moins une rainure (3) recreusée est supérieure ou égale à 70 % de la hauteur (H_{N3}) de ladite au moins une rainure recreusable (3) du pneumatique à l'état neuf.

2. - Pneumatique (1) selon la revendication 1, **caractérisé en ce que** la hauteur (Hᵢ) de ladite au moins une incision (8) du pneumatique à l'état neuf est supérieure à 90% de la hauteur correspondant à la distance entre la surface de roulement à l'état neuf et le fond de ladite au moins une rainure (3) après le dernier recreusage.

3. - Pneumatique (1) selon la revendication 1 ou 2, **caractérisé en ce que** la hauteur (Hᵢ) de ladite au moins une incision (8) du pneumatique à l'état neuf est égale à la hauteur correspondant à la distance entre la surface de roulement à l'état neuf et le fond de ladite au moins une rainure (3) après le dernier recreusage.

4. **-** Pneumatique (1) selon l'une des revendications précédentes, **caractérisé en ce que** la hauteur correspondant à la distance entre la surface de roulement à l'état neuf et le fond de ladite au moins une rainure (3) après le dernier recreusage est supérieure ou égale à 200% de la hauteur (H_{N3}) entre le fond de la rainure (3) et la surface de roulement lorsque le pneumatique est neuf.

5. - Pneumatique (1) selon l'une des revendications précédentes, **caractérisé en ce que** ladite au moins une rainure (3) recreusable est circonférentielle.

6. - Pneumatique (1) selon l'une des revendications 1 à 4, **caractérisé en ce que** ladite au moins une rainure (3) recreusable est transversale.

7. **-** Pneumatique (1) selon l'une des revendications 1 à 4, **caractérisé en ce que** ladite au moins une rainure (3) recreusable est oblique.

8. - Pneumatique (1) selon l'une des revendications précédentes, **caractérisé en ce qu'**au moins une rainure (3) recreusable est recreusable au moins deux fois.

9. - Pneumatique (1) selon la revendication 8, **caractérisé en ce que** le mélange élastomérique recreusé lors du premier recreusage est différent du mélange élastomérique recreusé lors du deuxième recreusage.

10. - Pneumatique (1) selon l'une des revendications précédentes, **caractérisé en ce que** le mélange élastomérique recreusable est différent d'au moins une partie du mélange élastomérique constitutif de la bande de roulement.

11. - Pneumatique (1) selon l'une des revendications précédentes, **caractérisé en ce que** ladite bande de roulement comporte, au moins localement, au moins deux couches de mélanges élastomériques radialement superposées dans la bande de roulement.

## Patentansprüche

1. Reifen (1), der mindestens einmal nachschneidbar ist, beinhaltend eine Gürtelverstärkung (5), die ihrerseits radial von einem Laufstreifen (6) bedeckt ist, der aus mindestens einer Elastomermischung besteht und über zwei Seitenwände mit zwei Wülsten verbunden ist, wobei der Laufstreifen (6) Folgendes umfasst: mindestens eine nachschneidbare Rille (3), die mindestens ein Profilelement zur Bildung des Profils des Reifens ausbildet und, wenn der Reifen neu ist, eine Höhe (H_{N3}) zwischen dem Boden der mindestens einen nachschneidbaren Rille (3) und der Laufoberfläche aufweist, und mindestens eine Lamelle (8), die, wenn der Reifen neu ist, mit der Laufoberfläche bündig ist und, wenn der Reifen neu ist, eine Höhe (Hᵢ) zwischen dem Boden der mindestens einen Lamelle (8) und der Laufoberfläche aufweist, **dadurch gekennzeichnet, dass** die Höhe (Hᵢ) der mindestens einen Lamelle (8) des Reifens im Neuzustand größer als die Höhe (H_{N3}) der mindestens einen nachschneidbaren Rille (3) des Reifens im Neuzustand ist und dass nach dem Nachschneiden die Höhe (H_{R}) der mindestens einen nachgeschnittenen Rille (3) größer oder gleich 70 % der Höhe (H_{N3}) der mindestens einen nachschneidbaren Rille (3) des Reifens im Neuzustand ist.

2. Reifen (1) nach Anspruch 1, **dadurch gekennzeichnet, dass** die Höhe (Hᵢ) der mindestens einen Lamelle (8) des Reifens im Neuzustand größer als 90 % der Höhe ist, die dem Abstand zwischen der Laufoberfläche im Neuzustand und dem Boden der mindestens einen Rille (3) nach dem letzten Nachschneiden entspricht.

3. Reifen (1) nach Anspruch 1 oder 2, **dadurch gekennzeichnet, dass** die Höhe (Hᵢ) der mindestens einen Lamelle (8) des Reifens im Neuzustand gleich der Höhe ist, die dem Abstand zwischen der Laufoberfläche im Neuzustand und dem Boden der mindestens einen Rille (3) nach dem letzten Nachschneiden entspricht.

4. Reifen (1) nach einem der vorhergehenden Ansprüche, **dadurch gekennzeichnet, dass** die Höhe, die dem Abstand zwischen der Laufoberfläche im Neuzustand und dem Boden der mindestens einen Rille (3) nach dem letzten Nachschneiden entspricht, größer oder gleich 200 % der Höhe (H_{N3}) zwischen dem Boden der Rille (3) und der Laufoberfläche, wenn der Reifen neu ist, ist.

5. Reifen (1) nach einem der vorhergehenden Ansprüche, **dadurch gekennzeichnet, dass** die mindestens eine nachschneidbare Rille (3) um den Umfang verläuft.

6. Reifen (1) nach einem der Ansprüche 1 bis 4, **dadurch gekennzeichnet, dass** die mindestens eine nachschneidbare Rille (3) quer verläuft.

7. Reifen (1) nach einem der Ansprüche 1 bis 4, **dadurch gekennzeichnet, dass** die mindestens eine nachschneidbare Rille (3) schräg verläuft.

8. Reifen (1) nach einem der vorhergehenden Ansprüche, **dadurch gekennzeichnet, dass** mindestens eine nachschneidbare Rille (3) mindestens zweimal nachschneidbar ist.

9. Reifen (1) nach Anspruch 8, **dadurch gekennzeichnet, dass** sich die während des ersten Nachschneidens nachgeschnittene Elastomermischung von der während des zweiten Nachschneidens nachgeschnittenen Elastomermischung unterscheidet.

10. Reifen (1) nach einem der vorhergehenden Ansprüche, **dadurch gekennzeichnet, dass** sich die nachschneidbare Elastomermischung von mindestens einem Teil der Elastomermischung, aus der der Laufstreifen gebildet ist, unterscheidet.

11. Reifen (1) nach einem der vorhergehenden Ansprüche, **dadurch gekennzeichnet, dass** der Laufstreifen mindestens lokal mindestens zwei Schichten von Elastomermischungen umfasst, die in dem Laufstreifen radial übereinander liegen.

## Claims

1. - Tyre (1) which can be regrooved at least once, comprising a crown reinforcement (5), itself radially capped by a tread (6), which is made of at least one elastomer compound and is joined to two beads via two sidewalls, said tread (6) having at least one re-cuttable groove (3) forming at least one tread pattern element making up the tread pattern of the tyre, exhibiting a height (H_{N3}) between the bottom of said at least one re-cuttable groove (3) and the tread surface when the tyre is new, and at least one sipe (8), flush with the tread surface when the tyre is new, exhibiting a height (Hᵢ) between the bottom of said at least one sipe (8) and the tread surface when the tyre is new, **characterized in that** the height (Hᵢ) of said at least one sipe (8) of the tyre when new is greater than the height (H_{N3}) of said at least one re-cuttable groove (3) of the tyre when new and **in that,** after the regrooving operation, the height (H_{R}) of said at least one re-cut groove (3) is greater than or equal to 70% of the height (H_{N3}) of said at least one re-cuttable groove (3) of the tyre when new.

2. - Tyre (1) according to Claim 1, **characterized in that** the height (Hᵢ) of said at least one sipe (8) of the tyre when new is greater than 90% of the height corresponding to the distance between the tread surface when new and the bottom of said at least one groove (3) after the last regrooving operation.

3. - Tyre (1) according to Claim 1 or 2, **characterized in that** the height (Hᵢ) of said at least one sipe (8) of the tyre when new is equal to the height corresponding to the distance between the tread surface when new and the bottom of said at least one groove (3) after the last regrooving operation.

4. - Tyre (1) according to one of the preceding claims, **characterized in that** the height corresponding to the distance between the tread surface when new and the bottom of said at least one groove (3) after the last regrooving operation is greater than or equal to 200% of the height (H_{N3}) between the bottom of the groove (3) and the tread surface when the tyre is new.

5. - Tyre (1) according to one of the preceding claims, **characterized in that** said at least one re-cuttable groove (3) is circumferential.

6. - Tyre (1) according to one of Claims 1 to 4, **characterized in that** said at least one re-cuttable groove (3) is transverse.

7. - Tyre (1) according to one of Claims 1 to 4, **characterized in that** said at least one re-cuttable groove (3) is oblique.

8. - Tyre (1) according to one of the preceding claims, **characterized in that** at least one re-cuttable groove (3) can be re-cut at least twice.

9. - Tyre (1) according to Claim 8, **characterized in that** the elastomer compound regrooved during the first regrooving operation is different from the elastomer compound regrooved during the second regrooving operation.

10. - Tyre (1) according to one of the preceding claims, **characterized in that** the regroovable elastomer compound is different from at least part of the elastomer compound that constitutes the tread.

11. - Tyre (1) according to one of the preceding claims, **characterized in that** said tread comprises, at least locally, at least two layers of elastomer compound radially superposed with one another in the tread.
